# EUROPEAN PATENT APPLICATION

(11) **EP 0 960 771 A2**
(43) Date of publication of application: **01.12.1999**
(21) Application number: 99302102.1
(22) Date of filing: 18.03.1999
(51) Int. Cl.: B60P 1/46

(54) **Lifting apparatus**

(30) Priority: 19.03.1998 GB 9805785; 09.01.1999 GB 9900383
(71) Applicant: Ross & Bonnyman Limited, Forfar, Angus DD8 3DG (GB)
(72) Inventor: Sherriff, Andrew Sinclair, Glenmavis, Airdrie ML6 ONR (GB)
(74) Representative: Pattullo, Norman

(57) **Abstract**

A lifting platform which is stowable beneath the floor of a vehicle such as a truck. The platform has an array of planks (10) hinged together at their long edges and spanning between two arms (7). The arms (7) can pivot against the face of the vehicle after the platform has been stowed.

## Description

This invention relates to lifting apparatus, particularly of the type for attachment at the rear of commercial vehicles to enable the effective transfer of heavy components between the ground and the vehicle, conventionally called a "tail-lift". Such apparatus can also be located at the front or side of the vehicle.

Conventional designs of tail-lifts generally have the problem that the platform must be stowed out of the way of the rear of the vehicle when not in use. Current designs of cantilever and retractable platforms have been designed to meet this problem, but such systems can restrict the access to the vehicle, are generally heavy, and require complex power and transmission systems for their operation. Subsidiary problems arise with the maintenance and operation of the power and transmission systems for conventional tail-lifts.

According to the present invention there is provided lifting apparatus for use with a vehicle, the apparatus comprising a platform which in one configuration spans between two arms, and which can be folded, rolled or compressed into a second configuration for storage on the vehicle.

Preferably, the arms are attached to a side (eg to the back) of the vehicle at pivot points allowing them to pivot from a first configuration where they are generally disposed against a face of the vehicle, to a second configuration where they extend outwardly from that (or another) face. The platform preferably comprises a number of rectangular members disposed parallel to one another and linked together by hinges at their long edges so that in one embodiment of the platform, in which up to around twenty members are hingedly linked together, the platform is capable of being flattened into it's first configuration when spanning between the arms, and is capable of being folded and/or rolled up in its second configuration.

The apparatus can be attached to any suitable part of the vehicle, but is most usefully attached at the rear of the vehicle and conveniently near to a door on the vehicle.

The hinges linking adjacent platform members preferably allow relative movement of around 30° to 90° (eg 40° - 60°), although narrower or wider ranges of movement may also be suitable for some applications. Ball (or cylinder) and socket joints can be useful in this regard. In such an embodiment, one long edge of a given link can have a cylinder or ball attached or protruding therefrom, and the opposite long edge of the link may have a socket for co-operation with the cylinder or ball on the adjacent link. The ball or cylinder can be a single formation or formed from several parts.

In a preferred embodiment of the invention, the arms are disposed on pistons which can form part of a hydraulic ram. In certain embodiments, there can be two hydraulic rams disposed one on either side of the back door of the vehicle. The piston of each hydraulic ram can be rotatable relative to the ram so as to allow pivoting of the arm to which it is attached in relation to the vehicle, and the ram can be extended to lower the platform or contracted to raise it as required. Preferably both rams are synchronised so that they move together, and the platform is level during movement.

In a preferred embodiment of the invention the platform is detachable from the arms when in the second stored configuration. In particular, it can be slid out of contact with the arms and into a storage container behind the arms and optionally beneath the vehicle floor. There may be a device provided to fold, roll or compress the platform in a particular way (there may be many optional ways of doing this) so as to facilitate removal of the platform from the container and return it to the arms.

An embodiment of the present invention will now be described by way of example and with reference to the accompanying drawings in which:-
Fig. 1a shows a rear perspective view of a truck;
Figs. 1b and c show end views of arms;
Fig. 2 shows a side view of a platform;
Fig. 3 shows a perspective view from the rear of the Fig. 1 truck with arms extended and the Fig. 2 platform spanning between the arms;
Fig. 4a and b show side views of the truck of Figs. 1 and 3 with the Fig. 2 platform extended;

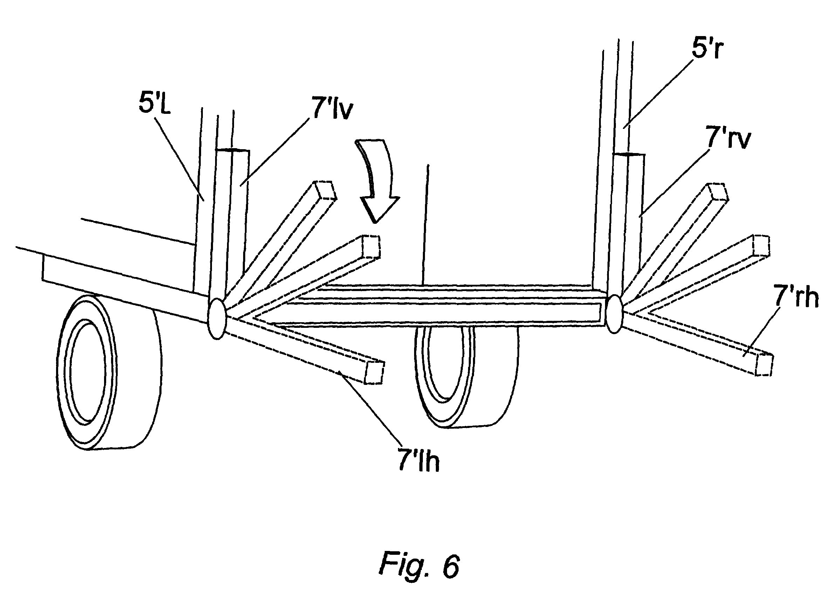

Fig. 5 shows a side view of an alternative platform;
Fig. 6 shows a perspective view of the back of an alternative truck;
Fig. 7a is a perspective view of a further embodiment of a platform;
Fig 7b is a perspective view of the Fig 7a platform with rollers attached;
Fig 7c is a schematic view showing the sequence of assembly of the rollers on the Fig 7 platform;
Fig. 8a is a perspective view of the Fig. 7 platform mounted on a test rig;
Fig 8b is a view of the Fig 8 rig with the platform being received into a storage container;
Figs. 9a and b are perspective views of the inner face of the storage container in Fig 8b;
Fig 9c is a perspective view of the outside casing of the Fig 9 and b container;
Figs. 10 a-c show a series of views of an arm assembly of the Fig. 8 platform;
Fig. 11 is a plan sectional view of a hydraulic ram of the Fig. 8 platform;
Fig. 12 is a series of views of a plank end cap of the Fig. 8 platform;
Fig. 13 is a series of views of a plug for the Fig. 12 end cap;
Fig. 14 is a side sectional view of a plank of the Fig. 8 platform;
Figs. 15a and 15b are plan views in section of a housing for a ram of the Fig. 8 platform;
Fig. 16 is a plan sectional view of a inner housing for a ram;
Fig. 17 is a section and plan view of a bearing for use in the Fig. 16 housing;
Fig. 18 is a side sectional view of an end plank;
Fig. 19 is a side sectional view of a kick plate for use in the Fig. 18 end plank;
Fig. 20 is a side sectional view of a cylinder assembly;
Fig. 21 is a plan and sectional view of a cylinder clamp;
Figs. 22a-d are a series of views of an arm assembly;
Figs 22e-m are a series of views of an arm;
Figs. 23a-g is a series of views of a bush plate for the arm assembly shown in Fig. 22a-d;
Fig. 24 shows a series of views of a pivot pin of the Fig. 22a-d arm assembly;
Figs. 25a-c show a caster;
Figs. 26a and b show a caster retainer pin;
Figs. 27a and b show a bush end cap retainer;
Figs. 28a-c show a housing side plate showed in Fig. 9;
Figs. 29a and b show a housing back and base plate; and
Fig. 30 shows a housing plate;

Referring now to the drawings, a lifting apparatus for use with a vehicle comprises a pair of hydraulic rams 51/r, Hydraulic rams 5 comprise an outer cylinder with telescopic pistons 61/6r slidably located therein. Pistons 6 can be extended from and retracted into cylinders 5 by hydraulic power apparatus (not shown).

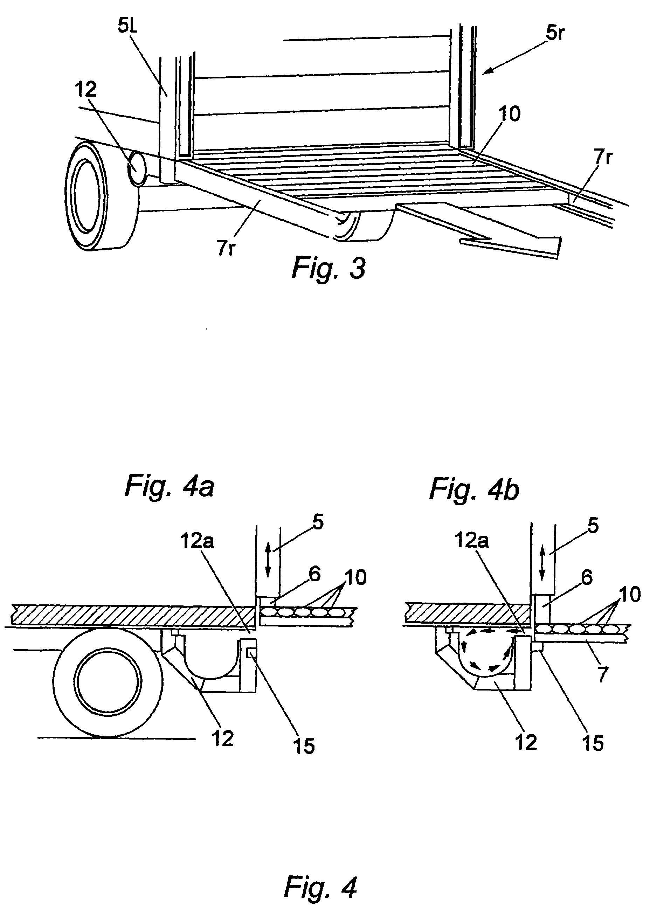

Arms 7 are attached to the lowermost ends of the pistons 6. The portions of the pistons 6 protruding from the lower ends of cylinders 5 are received in sockets on the arms 7. Arms 7 are attached to pistons 6 so as to be pivotally movable relative to the fixed cylinders 5. Therefore, the arms 7 can be pivoted in the plane perpendicular to the axis of the pistons 6 to lie parallel to the back of the truck, or to extend therefrom as shown in Fig 3. In certain embodiments the arms 7 can also (or alternatively) be pivoted in the plane parallel to the axis of the pistons 6 so as to fold up parallel to and lying against the rearmost edge of the cylinder.

In the present embodiment, the arms 7 can be pivotally attached to piston 6 by the sockets, or piston 6 can be rotatable within cylinders 5.

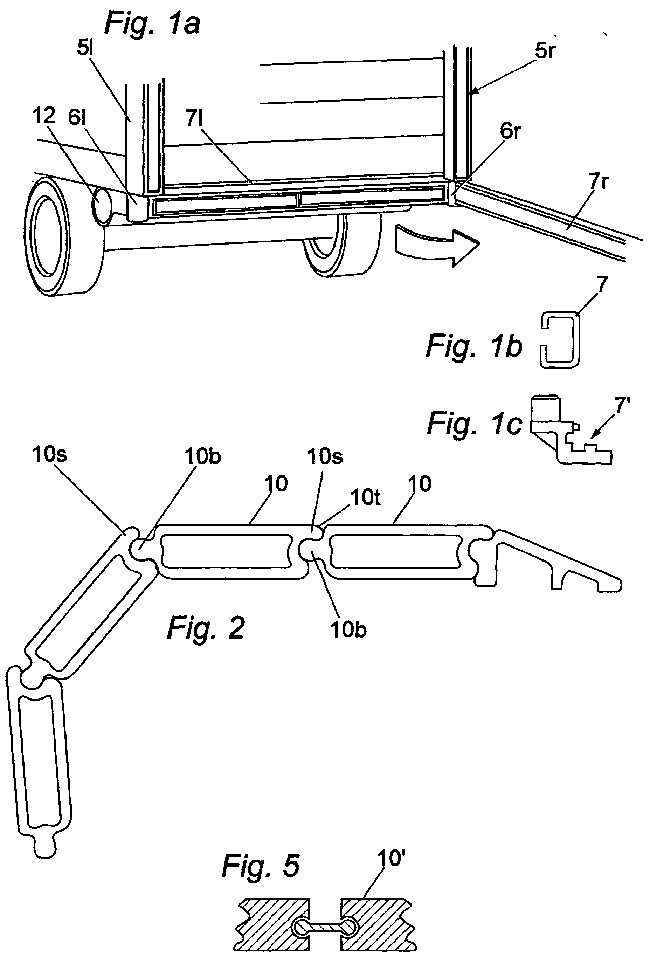

Arms 7 optionally have a generally C-shaped cross section as shown in Fig. 1b. Alternatively, the arms may simply have a horizontal ledge 7' for supporting the platform as shown in Fig. 1c.

The lifting surface is provided by a collapsible platform optionally arranged in a sheet as shown in Fig. 2 and comprising an arrangement of rectangular links 10 which are joined together along their parallel edges by ball and socket joints 10b/10s. The balls 10b can be spherical or cylindrical protrusions which extend along the long edge. The sockets 10s can be spherical to receive spherical balls or can preferably extend along the length of the edge to accommodate edge-long cylinders. The joint 10b/10s allows relative folding of adjacent links 10 so that adjacent links can be disposed at approximately up to 45° to one another, although any suitable angle can be chosen. A stop shoulder 10t can optionally be placed on either adjacent edge to restrict relative bending of adjacent links in one direction (ie upwardly as shown in Fig 2). This allows the array of links 10 to be folded each at the defined angle to its adjacent link and rolled up into a storage container 12 typically located on the underside of the truck 4.

In operation, the arms 7 are unlocked from their position adjacent the rear face of the truck, and are pivoted (by hand, spring or by motor) outwardly in the direction of the arrow in Fig 1a to extend perpendicular outwards from the rear face of the truck. A pair of retractable stops 15 located on the platform storage container 12 are then moved out to extend into the path of the pistons 6, and the hydraulic rams are operated to extend the pistons 6 in the cylinders 5 until the ends of the arms 7 abut against the retractable stops 15. At that position, the motor driving the hydraulic rams is disengaged and the opening 12a of the storage container 12 is aligned with the arms 7 as shown in Fig. 4b, This is the park position for the arms. Once in that position, the platform comprising the links 10 can be pulled or driven from the container 12 and the sides of the platform can be located and held in the C-shaped section of the arms 7. The platform can then be pulled out to the full (or desired) extent of the arms and locked in place whereupon the hydraulic rams can be activated to retract piston 6 and to raise the platform to the level of the truck floor as shown in Fig. 4a and/or to extend the piston 6 to lower the platform to the ground once the retractable stop 15 has been retracted from the path of the piston 6.

Once the lifting operation is finished, the platform is raised to the position shown in Fig. 4a, the retractable stop is moved to its position shown in Fig. 4b in the path of the piston 6, the platform aligned with the opening 12a and the platform can be rolled back into the container 12 before the arms 7 are folded back against the end of the truck and locked in position.

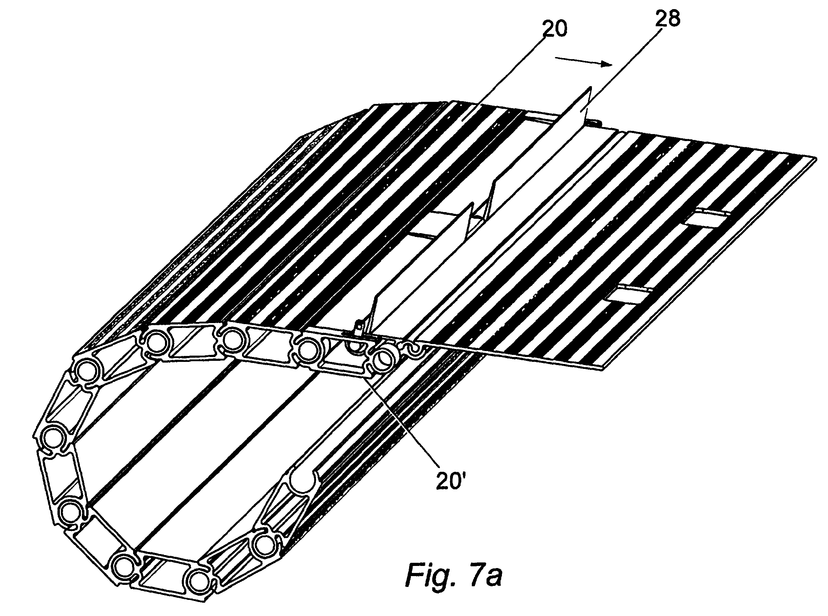

Fig. 6 shows an alternative embodiment in which arms 7' can pivot from the position in which they support the platform in the vertical plane perpendicular to the rear face of the truck, and are stowed against the cylinders 5' in a vertical position 7'lv/7'rv, In the horizontal position 6'lh/6'rh they are locked and can be moved up and down in relation to the cylinders to receive and move the platform and allow it to be realigned with the aperture 12a for storage as described for the previous embodiment. The operation of the Fig. 6 embodiment thereafter is the same as that described for the first embodiment. After the platform has been stored in the container 12 after use, the arms 6' can be unlocked and folded in reverse against the cylinders 5.

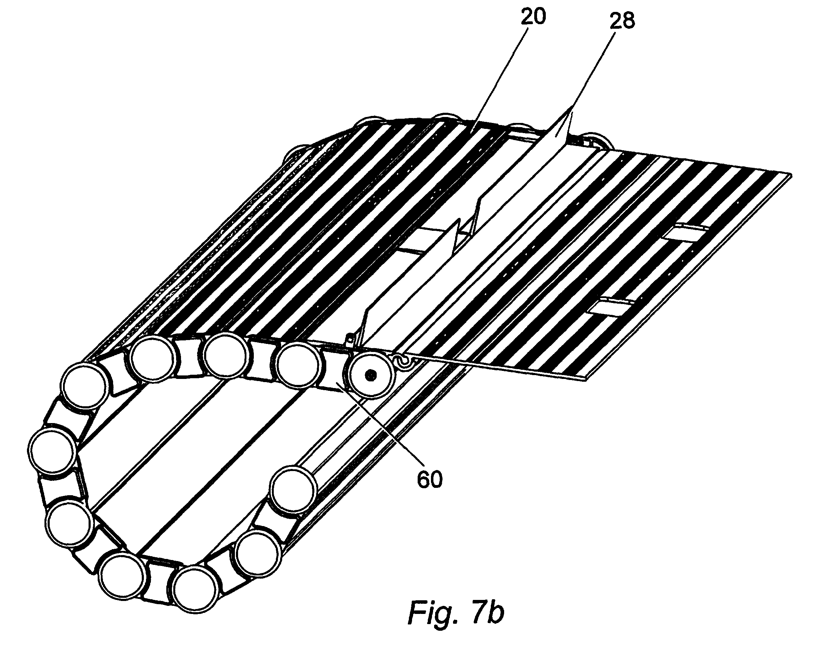

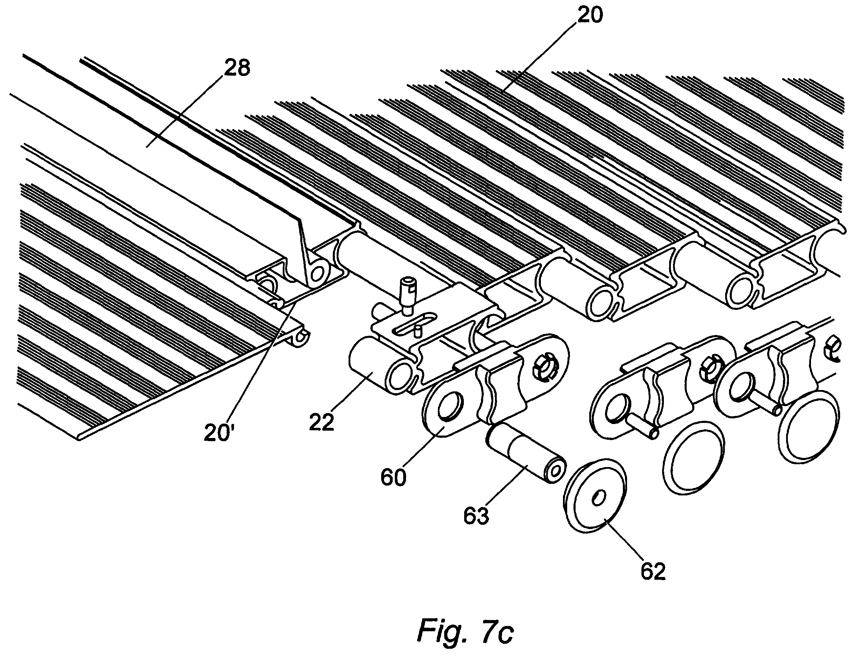

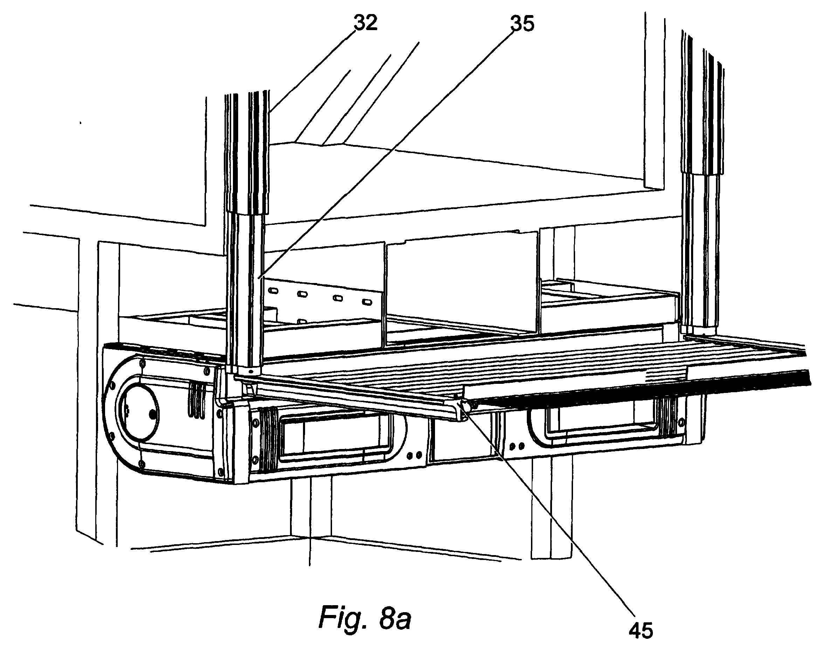

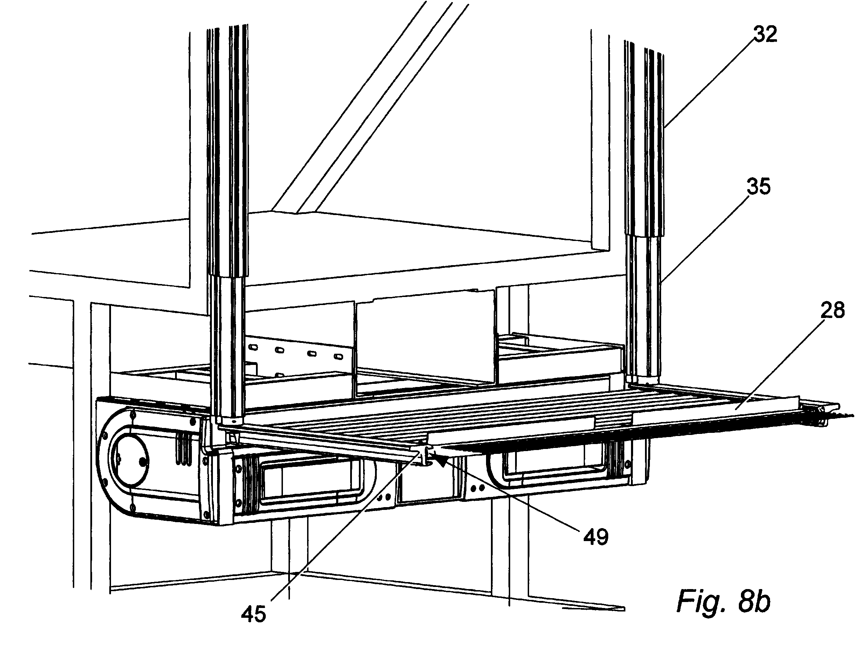

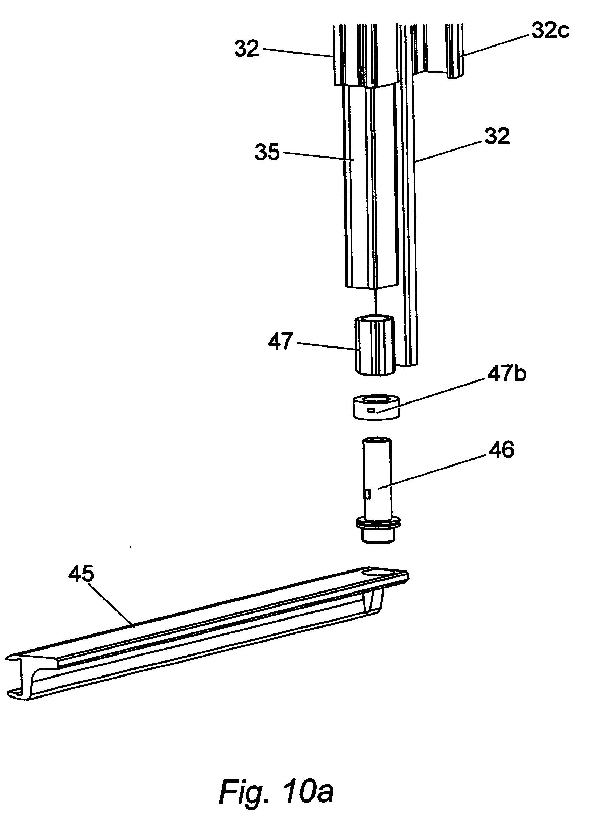

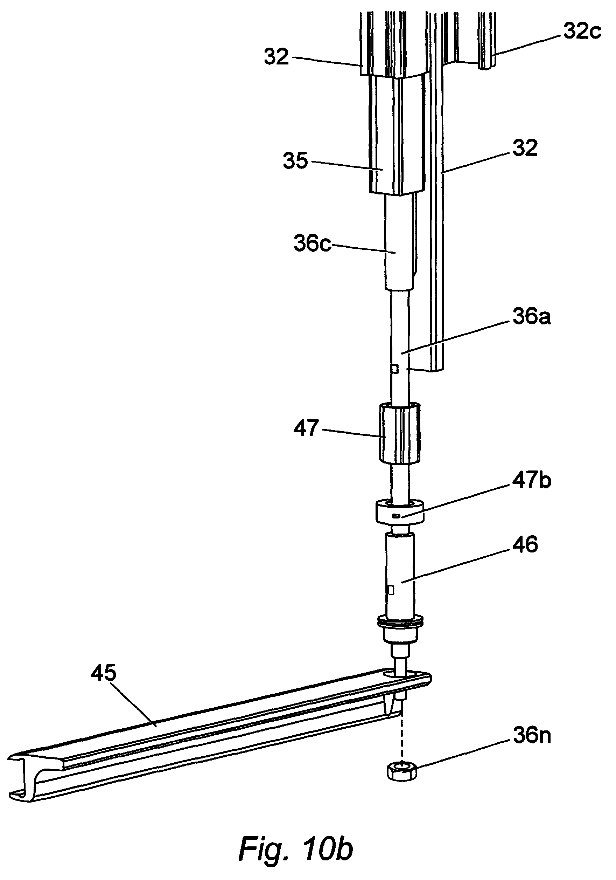

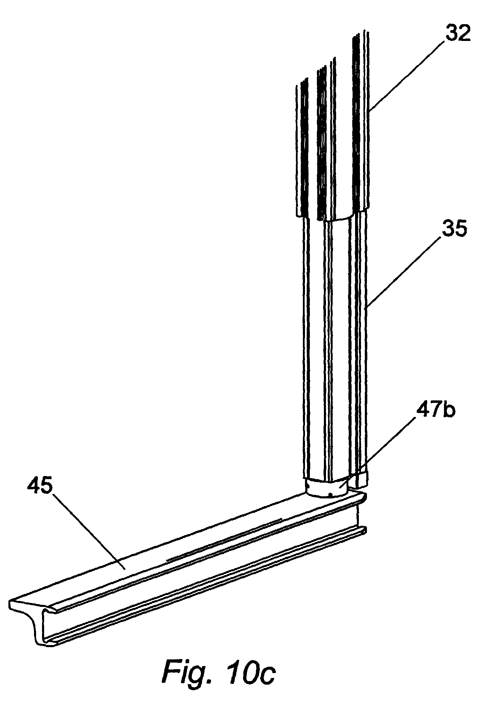

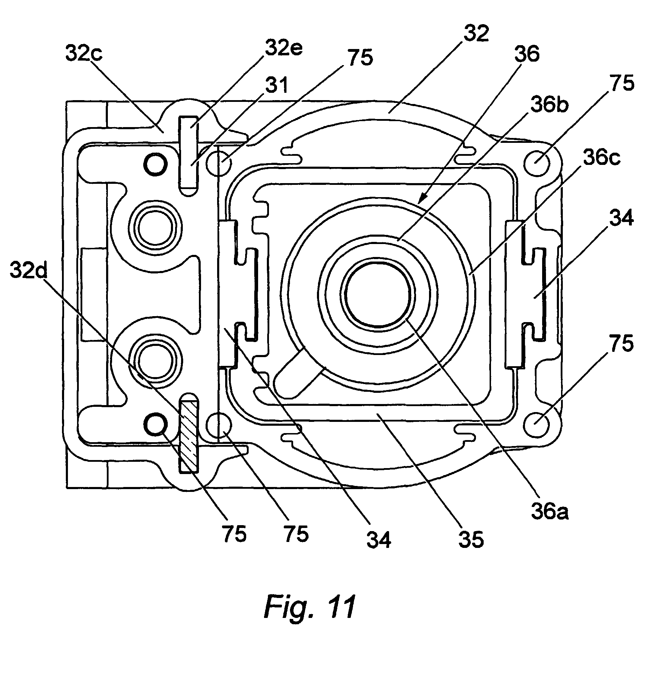

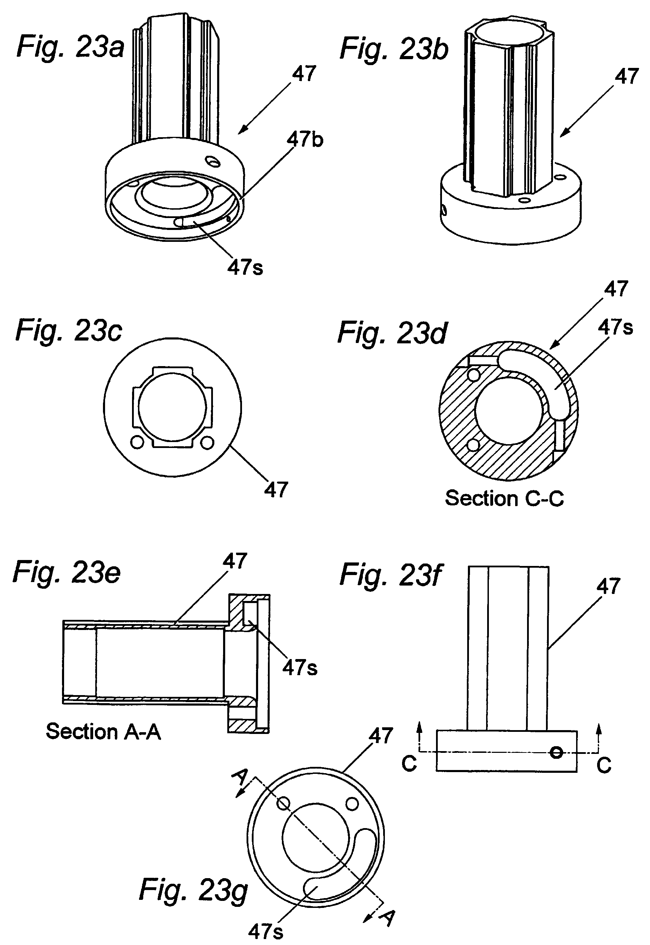

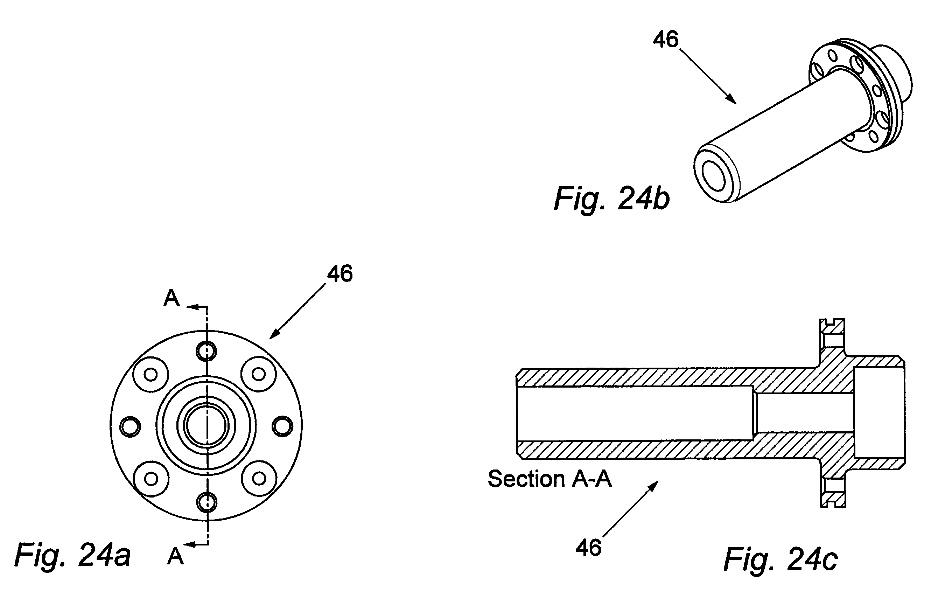

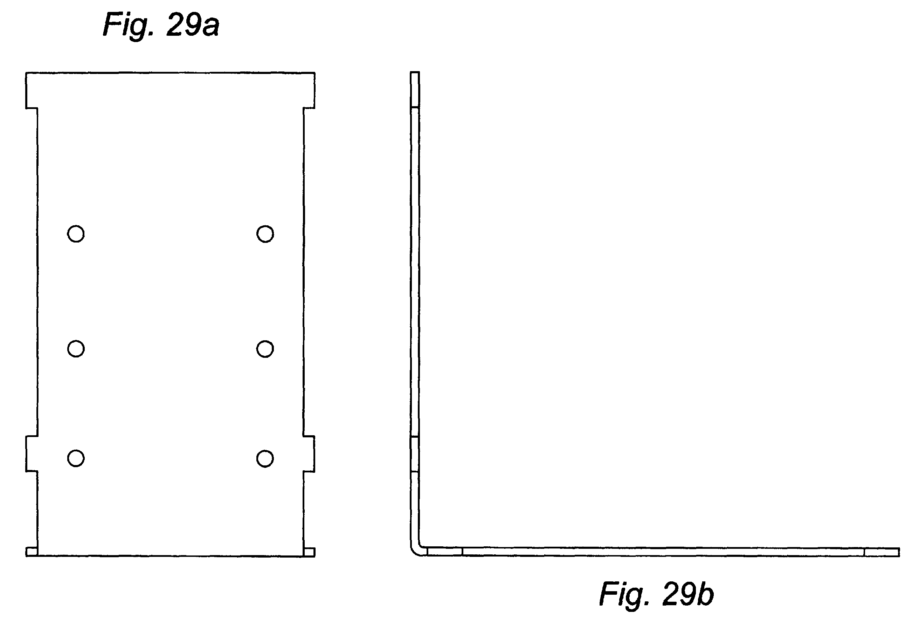

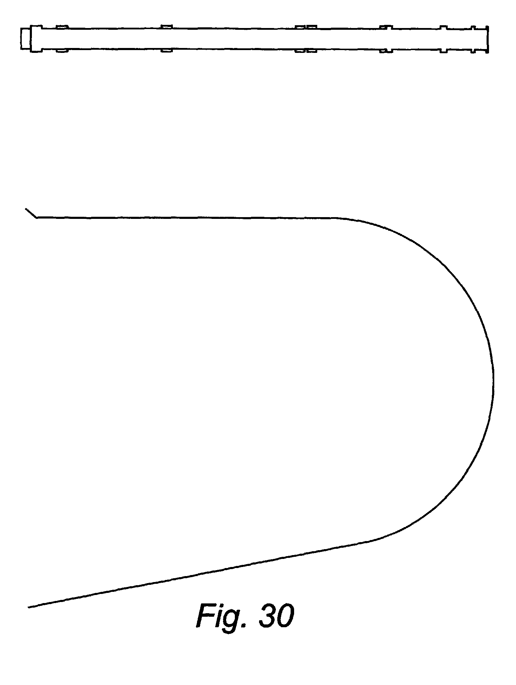

A further embodiment of the invention will now be described, by way of example only, with reference to Figs. 7 to 30.

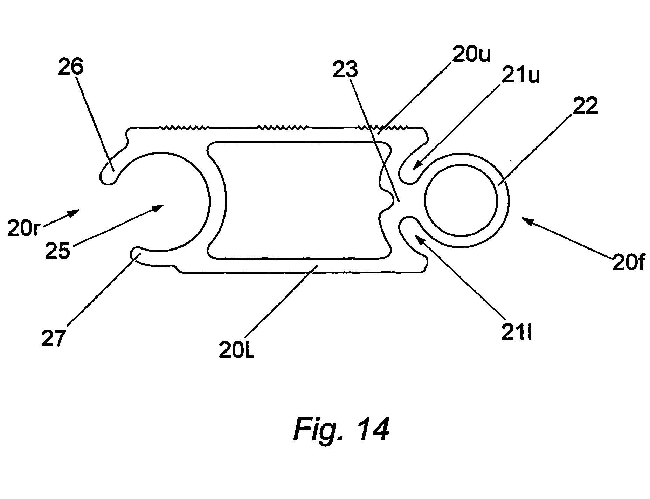

Referring now to Figs. 7-30, a platform comprises an arrangement of planks 20 (Fig. 14) having an upper surface 20U, a lower surface 20L, a front end 20F, and a rear end 20R. The upper 20U and lower surfaces 20L are parallel, and extend between the two ends 20F, 20R. The front end 20F has a cylindrical head 22 extending along the length of the front edge which is connected to the upper and lower faces by a recessed neck 23. The ends of the upper and lower faces and the outer surface of the head 22 form channel 21U and 21L between them. The rear end 20R has a hemispherical aperture 25 formed by a pair of upper and lower jaws 26, 27 which circumscribe the hemispherical aperture 25, and extend along the length of the edge at 20R. The aperture 25 is adapted to receive the head 22 of an adjacent plank 20, and to allow pivotal rotation around the access of the head 22 which coincides with the access of the aperture 25 when the two planks 20 are joined together. The jaws 26 and 27 allow pivotal movement to the extent that the jaws 26 and 27 are free to move in the channels 21U and 21L respectively, but the upper jaw 26 limits upward pivotal movement of adjacent planks beyond a parallel configuration by abutting against the neck 23. Downward pivotal movement of adjacent planks 20 can occur until the end of the jaw 27 abuts against the neck 23 in the channel 21L. Thus, adjacent planks 20 are permitted around 40° of downward pivotal movement in relation to one another, but the angle can easily be varied without departing from the scope of the invention.

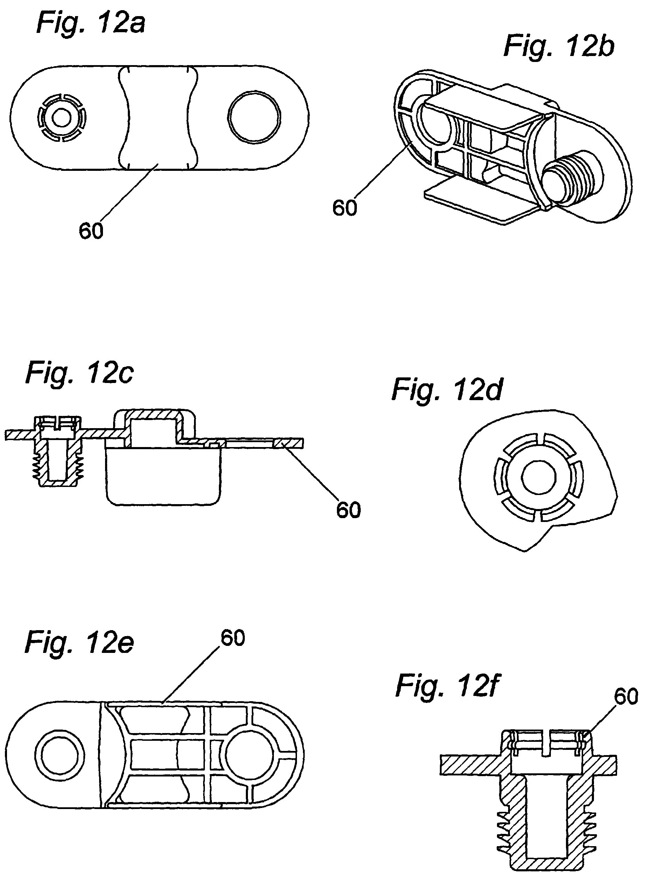

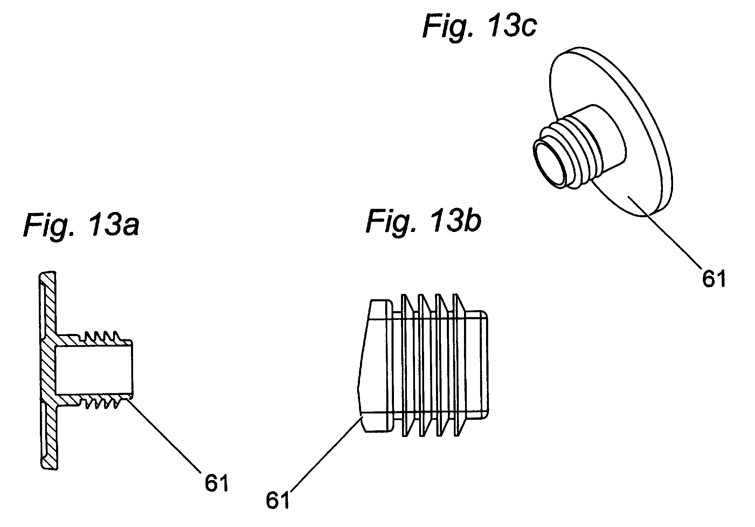

Planks 20 are faced at their short edges with end caps 60 (Fig. 12) which interconnect and are in turn faced off with plugs 61 (Fig. 13) or preferably casters 62 supported on dowels 63 or retaining pins 52 which are inserted into the channels formed in the heads 22.

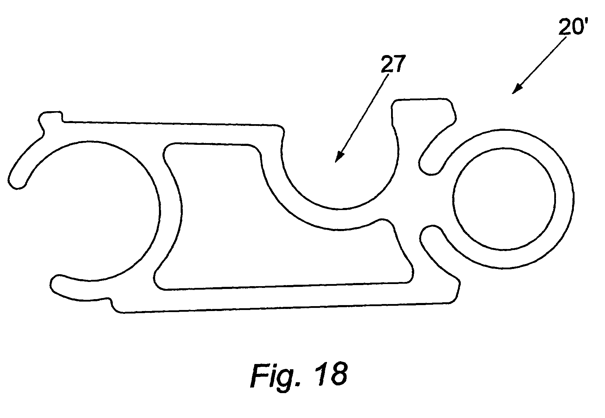

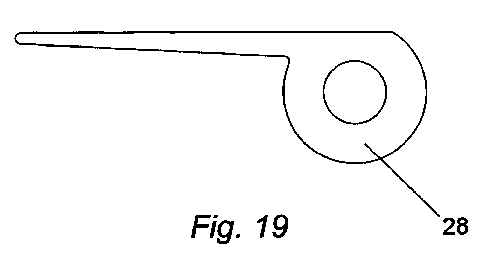

The last plank in a platform can comprise a kick plate extrusion such as that shown in Fig. 18 and numbered 20'. Plank 20' has an aperture 27 for receiving a kick plate head 28 (Fig. 19) which can pivot therein and can be kicked to an upstanding position perpendicular to the faces of the plank 20' so as to prevent movement of wheeled articles on the platform in the direction of the arrow in Fig 7a (ie backwards off the edge of the platform). Movement in the other direction is permitted since the plate 28 simply folds flat against the upper surface of the extrusion 20'.

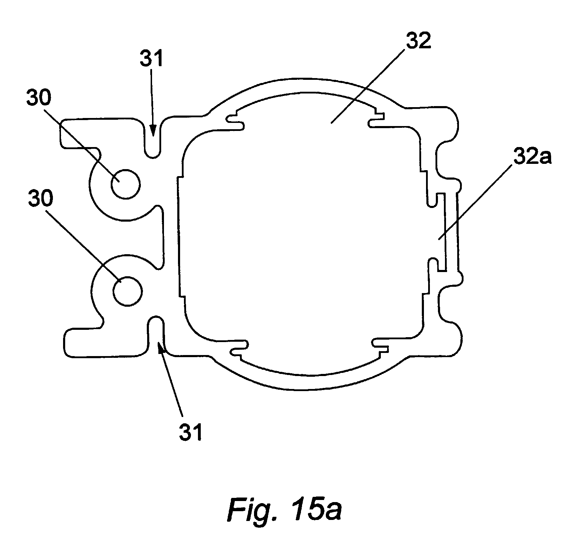

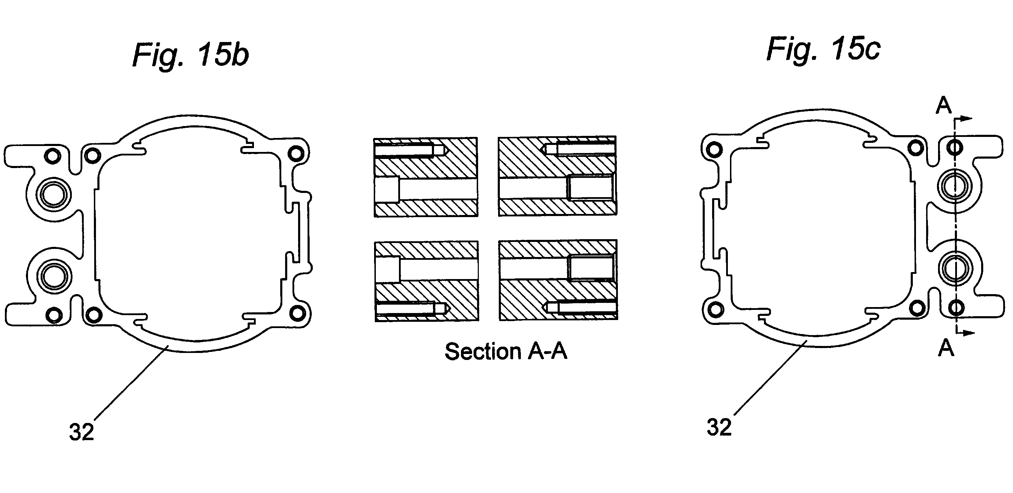

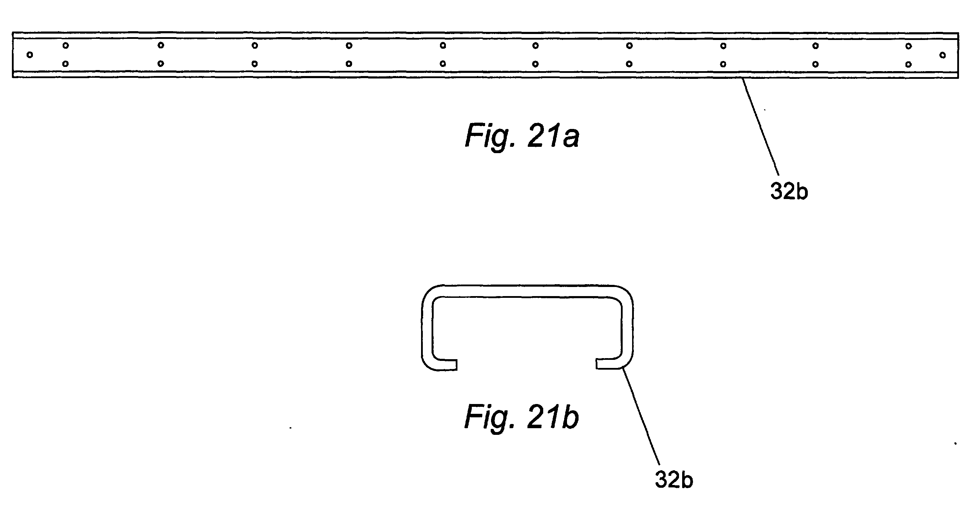

Hydraulic cylinders 36 are located in housings attached to either side of the opening of the cargo area. Outer housing 32 (Fig. 15) has a pair of communication conduits 30 for hydraulic fluid transmission and is attached to the truck by a fixing bracket 32c and retaining strip 32d which can be inserted into the slot formed between the recess 32e in the bracket 32c and recess 31 in the housing 32, and removed therefrom during disassembly. A variant 32b of the bracket 32c is shown in Fig. 21 in the form of a C-shaped section whose tips engage in recesses 31 on the housing 32.

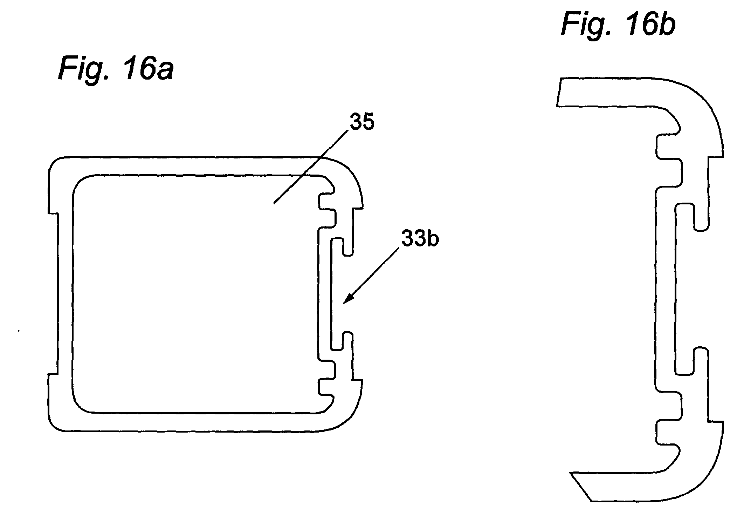

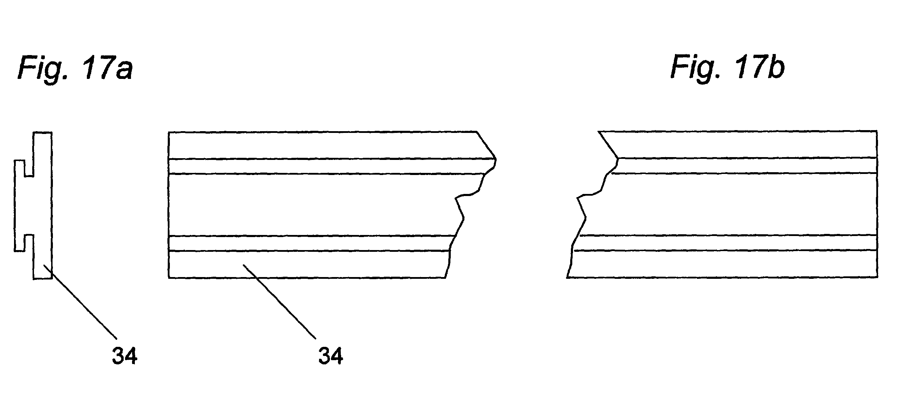

An inner housing 35 (Fig. 16) is disposed in the central bore of the outer housing 32 and a pair of bearing strips 34 (Fig. 17) can be disposed in longitudinally extending recesses 33 on either side of the outer housing 32 to provide a bearing surface between the outer and inner housings and to reduce the wear on them when the platform is bearing loads.

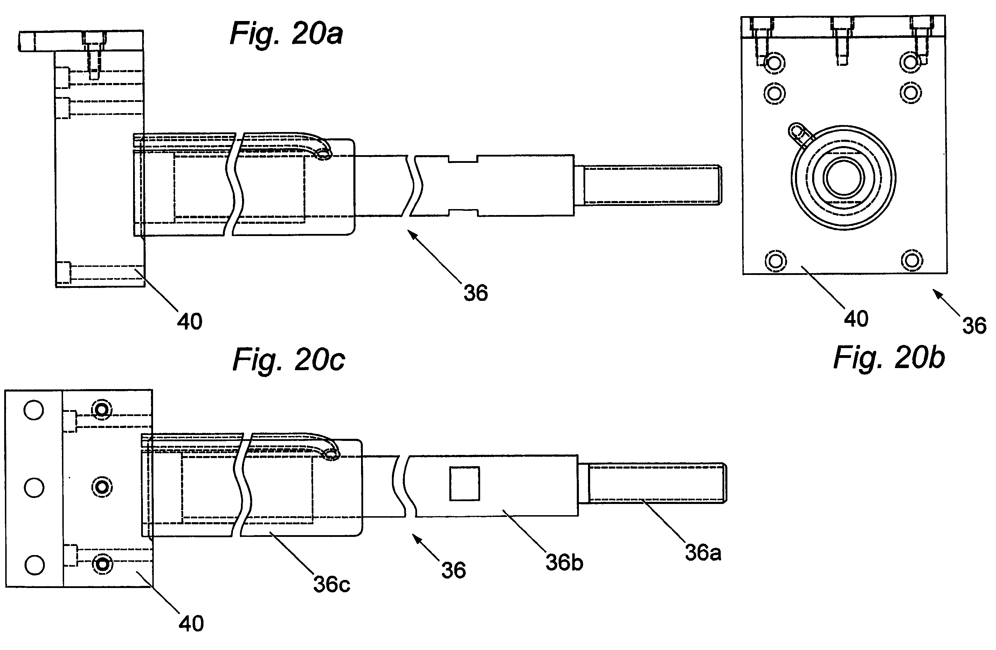

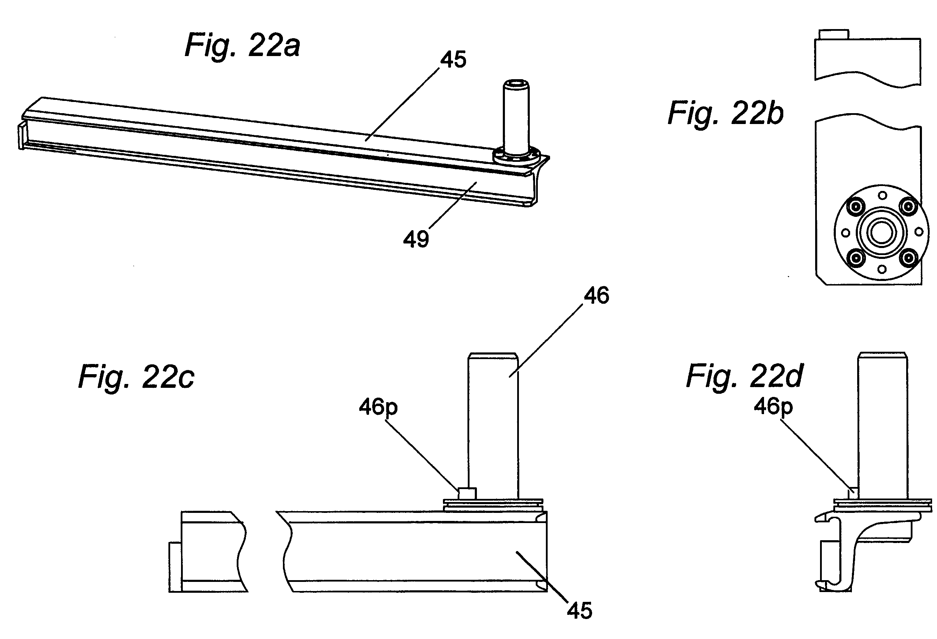

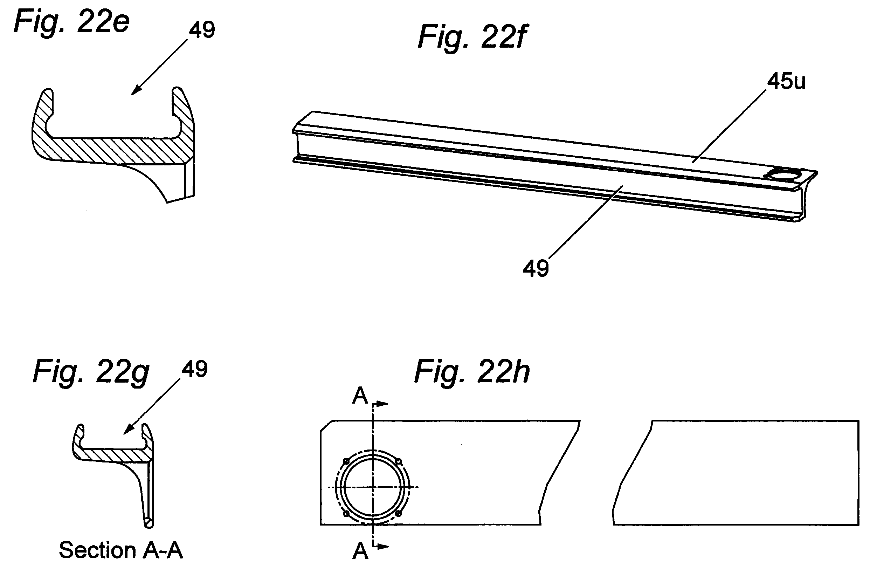

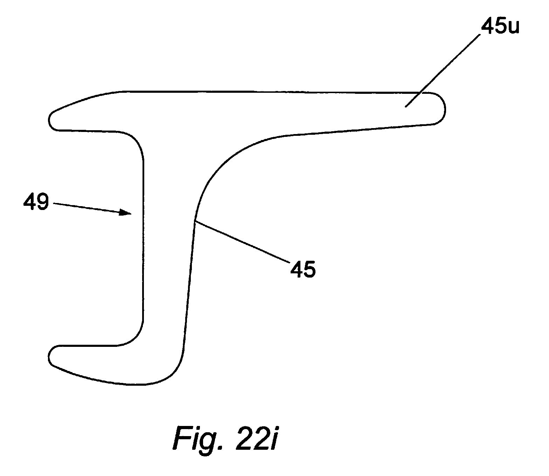

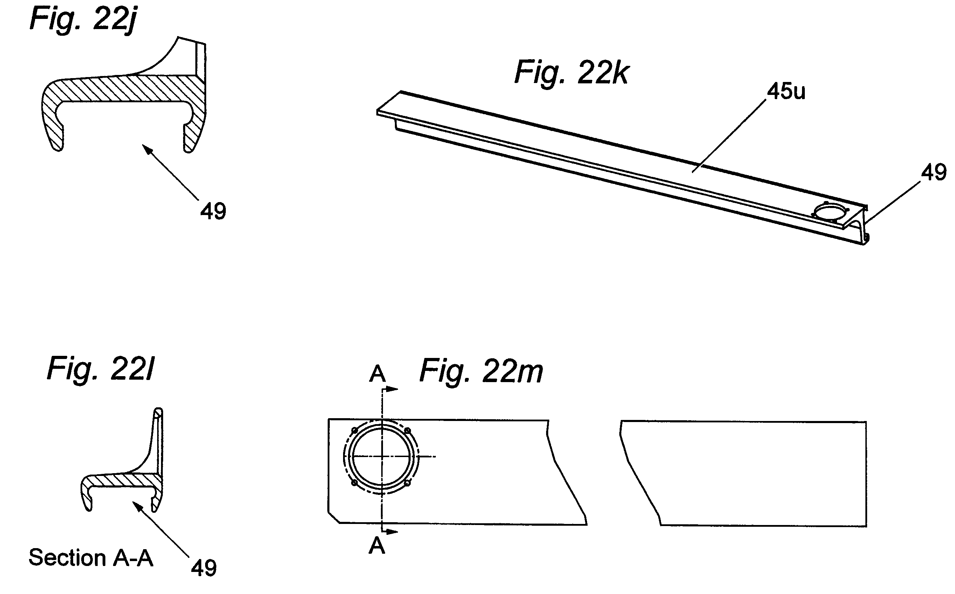

A hydraulic cylinder assembly 36 comprising 1 or 2 cylinders b,c and a rod a arranged telescopically inside one another (Fig. 20) is disposed in the inner bore of the inner housing 35 and is pivotally attached at its top block 40 to outer housing 32, and at the end of its rod 36c to arms 45 (Fig. 22). The end of the rod 36c is threaded to receive a nut 36n which is simply tightened against the arm 45 when the arm assembly is made up.

A bush extrusion 47 is attached in the inner bore of the inner housing 35 and has a plate 47b attached to it's base. The rod 36c passes through the bore of the bush plate 47b and extrusion 47, and through a pivot 46 which is attached to the arm 45 at it's base, and can pivot in the bore of the bush plate and extrusion 47.

The bush plate 47b has a 90° annular slot 47s. A pin 46p on the base of the pivot 46 engages in the slot 47s when the arm is assembled. The pin 46p allows rotation of the pivot pin 46 in the bore of the bush plate 47 around 90° thereby limiting the scope of pivotal rotation of the arms 45 relative to the housing. The extent of rotation of the arms 45 can, of course, be varied by extending or reducing the annular range of the slot in the bush plate 47b or the size of the pin 46p.

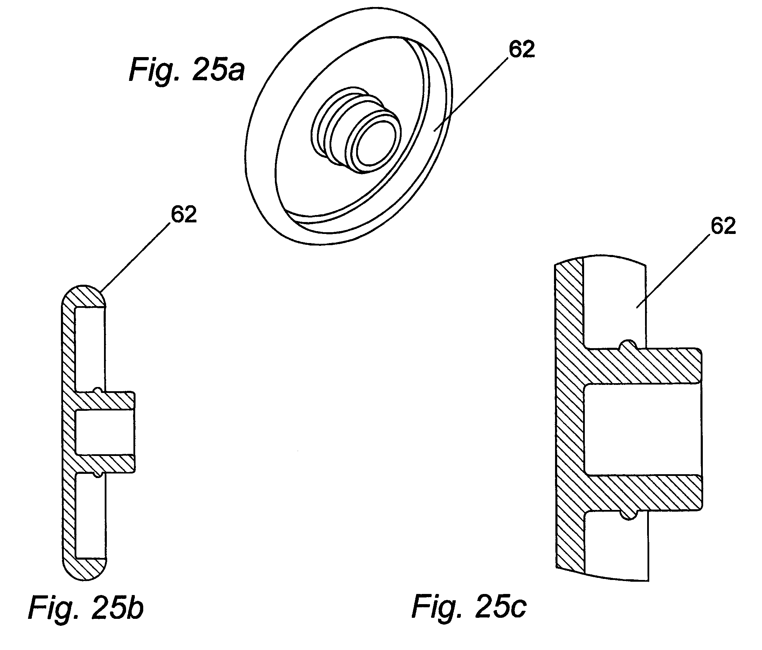

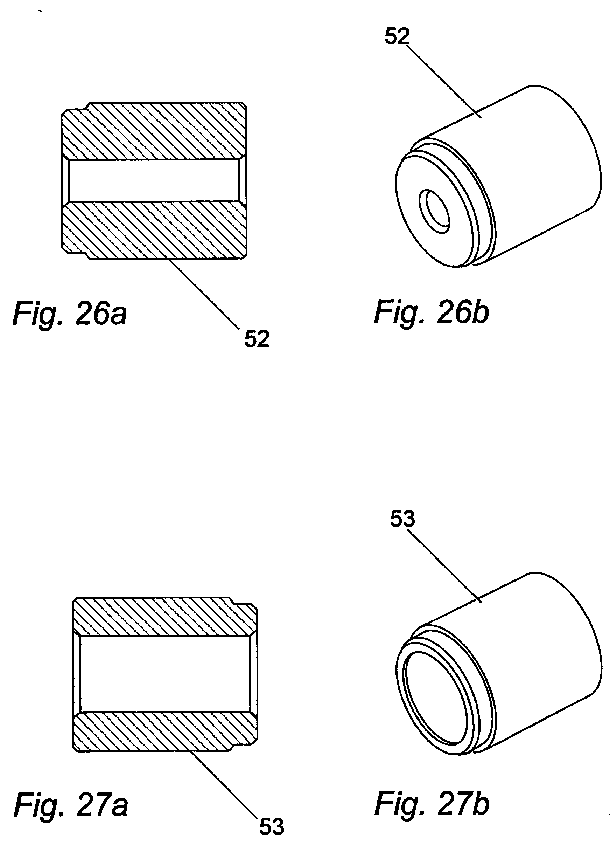

The arms 45 have an upper surface 45U and a generally C-shaped runner 49 extending generally downwardly from the upper surface 45U. The C shaped runner 49 retains captive a series of casters 62 (Fig. 25) mounted on dowels 63 or retaining pins 52 (Fig. 26) which are located in bush end cap retainers 53 (Fig. 27) which extend through end caps 60 (Fig. 12) into the central bores of heads 22 in the planks 20, thereby supporting the plank ends at the front and rear of each plank 20. The bush 53 provides a bearing surface for the caster retaining pin 52.

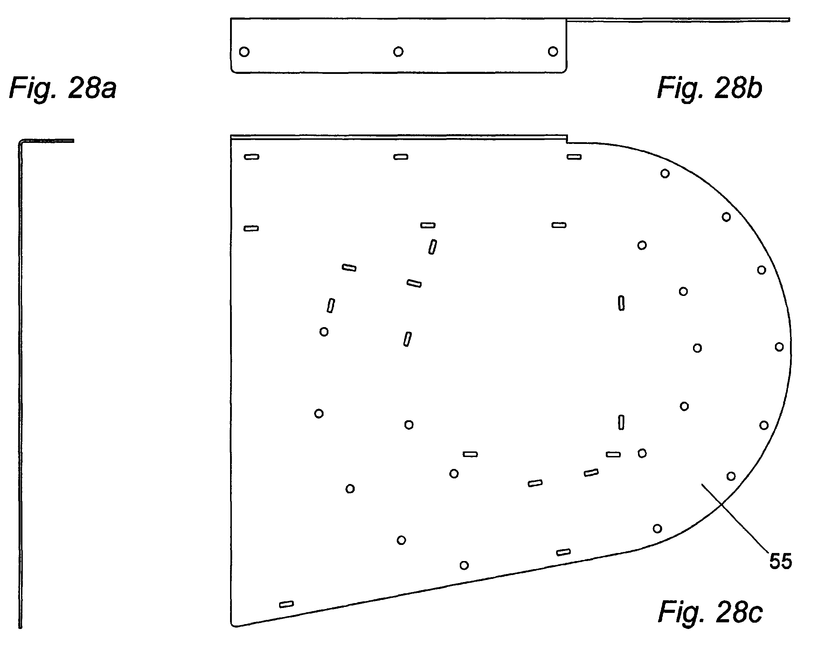

When the planks 20 are pivoted downwardly relative to one another when the platform is being pushed into the housing, they adopt an eventual configuration similar to that shown in Fig. 7a and b, and guide means 70 and rollers 71 in the housing side plate 55 (Fig. 28) can be employed to guide the folding movement of the rolled up platform in the housing.

In preferred embodiments of this design of the invention, the pivotal movement of the arms occurs by means of pivotal movement of the pistons in the cylinder assembly rather than by pivotal movement of the bush and pivot pin secured to the arms. This can result in less bearing stress.

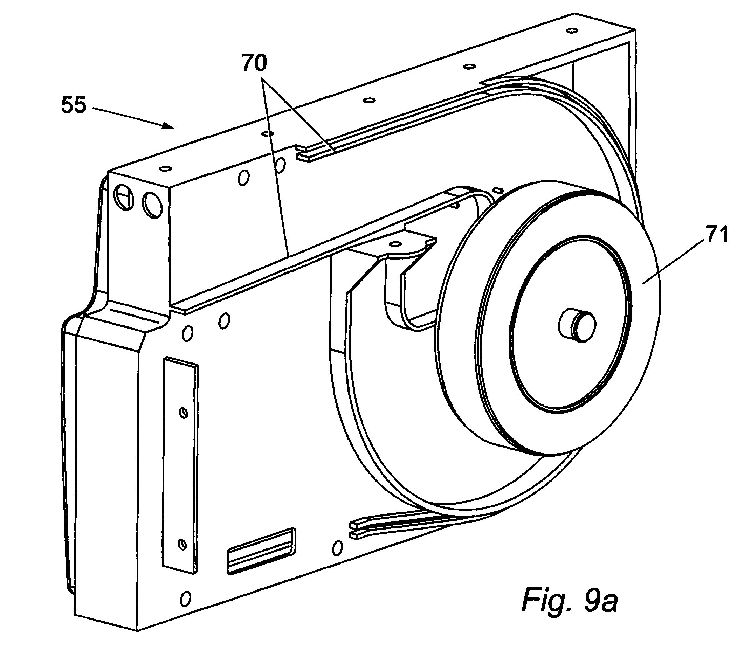

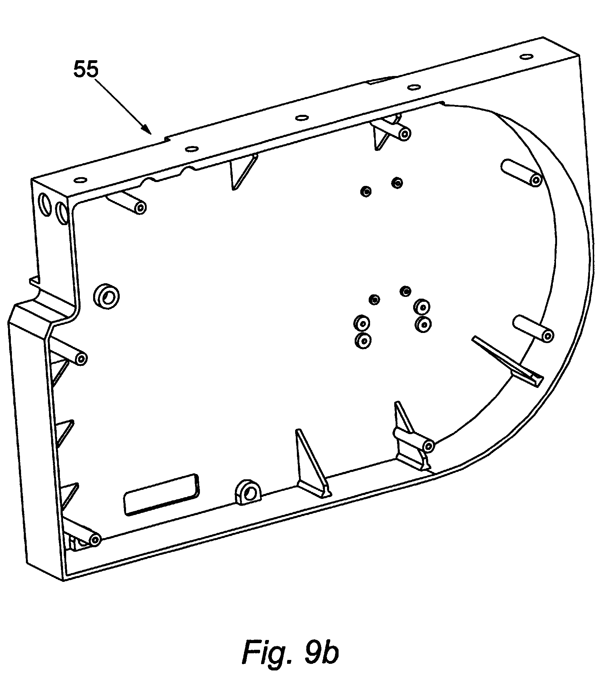

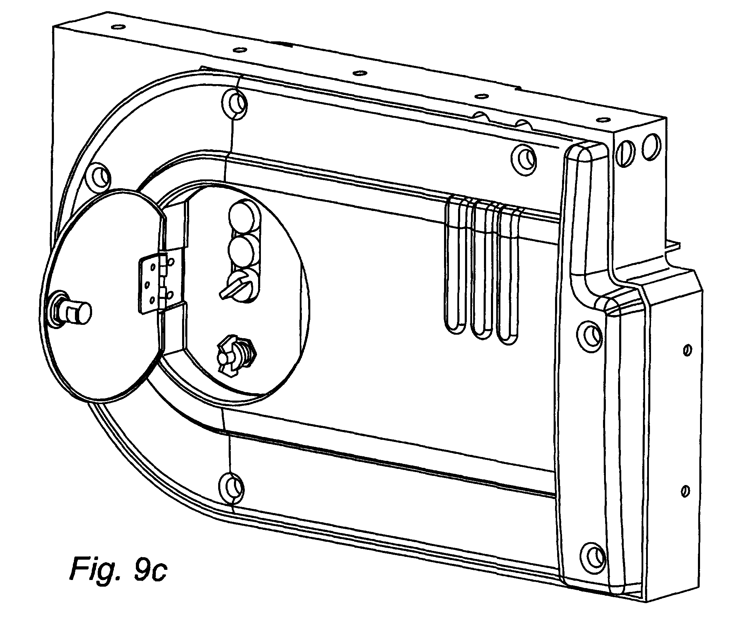

In a preferred embodiment of this version of the invention, there are optionally provided control means remote from the front edge of the platform (ie that closest to the cargo area of the truck) for operation of the device. An embodiment is shown in Fig 9c where the controls for movement up and down of the platform and for it's parking, as well as an isolator switch for the controls are located behind a lockable access panel. The provision of controls which cannot be operated be a person standing on the platform is beneficial since it is common for injuries to occur to a user's limbs when they are trapped between the bed of the truck and the end of the platform as it is moving upwards. Therefore, controls are preferably spaced from the front end of the platform in use, so that operation of the platform must be carried out away from that area. In another preferred embodiment, foot controls are located on the arms at the rear ends thereof. Control signals can be transmitted by radio, infra-red or by induction in order to avoid complex wiring installations which may be subject to interference by condensation or low temperature etc. Optionally, the signals may also be ultrasonic.

The hydraulic cylinders 36 are preferably powered by one or more rechargeable battery(s) which can be located in the storage container, and the track followed by the platform when folding into the storage container is preferably in a general C shape, and in such an event, the power pack and other control means can usefully be located between the arms of the C.

The hydraulic cylinders are usefully powered by a single hydraulic source and can have a flow divider device determining the amount of pressure supplied to respective cylinders. This can even the flow to both cylinders and ensure that the platform rises parallel to the bed of the truck. In certain embodiments of the invention, valves can be provided in the hydraulic pistons which can be activated to release pressure from a cylinder when that cylinder reaches the point at which the platform is level with the bed of the truck. In that event, continued operation of the other hydraulic cylinder will bring the other side of the platform up to floor level and will automatically cease operation when the platform reaches the floor level and is parallel to the bed of the truck.

Cavities 75 in the hydraulic cylinder assembly can be provided, for example in the outer housing, for sensors and wiring etc. Sensors are optionally provided to sense positions of the hydraulic cylinder, and to correlate that to the position of the platform in relation to the truck bed.

End caps in the ends of planks can assist in preventing lateral movement of adjacent planks and thereby steady the platform.

Modifications and improvements can be made without departing from the scope of the invention.

## Claims

1. Lifting apparatus for use with a vehicle, the apparatus comprising a platform which in a first configuration spans between two arms, and which can be folded, rolled or compressed into a second configuration for storage on the vehicle.

2. Apparatus as claimed in claim 1, wherein the platform is movable in the first configuration.

3. Apparatus as claimed in claim 1 or claim 2, wherein the arms each have a pivot device enabling them to move pivotally from a first configuration where, in use, they are disposed against a face of the vehicle, to a second configuration where they extend outwardly from that face.

4. Apparatus as claimed in a claim 1, 2 or 3, wherein the platform comprises at least two plank members linked together by a hinge at their adjacent edges.

5. Apparatus as claimed in claim 4, wherein the hinge linking adjacent platform members preferably allows relative movement between the members of 30° to 90°.

6. Apparatus as claimed in any preceding claim, wherein the arms are moved by a hydraulic ram device.

7. Apparatus as claimed in claim 6 wherein each arm is moved by a respective hydraulic ram device.

8. Apparatus as claimed in claim 6, wherein a single hydraulic ram device moves more than one arm.

9. Apparatus as claimed in claim 6 or claim 7, wherein hydraulic ram devices are synchronised so that the arms move together.

10. Apparatus as claimed in any preceding claim, wherein the platform is detachable from the arms when in the second stored configuration.

11. Apparatus as claimed in any preceding claim, wherein the platform can be moved into a storage container.

12. Apparatus as claimed in any preceding claim, having guide means for controlling the movement of the platform and determining the second configuration.

13. Apparatus as claimed in any preceding claim, having a motor to drive movement of the platform between the first and second configurations.

14. A vehicle having lifting apparatus as claimed in any preceding claim.

15. A vehicle as claimed in claim 14, wherein the platform is attached adjacent an opening on the vehicle.
